# NEUE EUROPÄISCHE PATENTSCHRIFT

(11) **EP 0 321 750 B2**
(45) Veröffentlichungstag und Bekanntmachung des Hinweises auf die Entscheidung über den Einspruch: **24.03.1993**
(45) Hinweis auf die Patenterteilung: 19.09.1990
(21) Anmeldenummer: 88119999.6
(22) Anmeldetag: 30.11.1988
(51) Int. Cl.: B01J 13/02, B41M 5/124

(54) **Verfahren zur Herstellung von Mikrokapseln, die danach erhältlichen Mikrokapseln und deren Verwendung**
Process fpr preparing microcapsules, the microcapsules prepared by said process and their use
Procédé de fabrication de microcapsules, les microcapsules ainsi préparées et leur utilisation

(30) Priorität: 01.06.1988 DE 3818712; 21.12.1987 DE 3743427
(43) Veröffentlichungstag der Anmeldung: 28.06.1989
(73) Patentinhaber: Papierfabrik August Koehler AG, D-77696 Oberkirch (DE)
(72) Erfinder: Pietsch, Günter, D-3004 Isernhagen 2 (DE); Schrader, Karl-Heinz, D-3000 Hannover 1 (DE)
(74) Vertreter: Hagemann, Heinrich, Dr.rer.nat., Dipl.-Chem.

(56) Entgegenhaltungen:
- DE-A- 1 519 771
- DE-A- 3 114 035
- DE-C- 3 545 803
- FR-A- 2 114 380
- FR-A- 2 146 255
- FR-A- 2 441 417

## Beschreibung

Die Erfindung betrifft ein Verfahren zur Herstellung von Mikrokapseln durch Mikroverkapselung von hydrophoben Ölen, insbesondere mit darin enthaltenen Substanzen, wobei das hydrophobe Öl unter starkem Rühren in ein eine dispersionsstabilisierende Verbindung enthaltendes wäßriges Medium eingemischt wird und in der sauer eingestellten ÖI-in-Wasser-Dispersion nach Zugabe eines Aminoplastwandbildners Mikrokapseln in üblicher Weise gebildet werden und danach gegebenenfalls der wäßrige Anteil des wäßrigen Medium in üblicher Weise entfernt wird, die danach erhältlichen Mikrokapseln und deren Verwendung.

Es sind vielfältige Verfahren zur Mikroverkapselung von hydrophoben Ölen, insbesondere mit darin gelösten bzw. dispergierten Farbbildnern von Reaktionsdurchschreibesystemen, bekannt. Die damit herstellbaren Mikrokapseln, die in der Regel eine ölige, hydrophobe Lösung des Farbbildners enthalten, werden in üblicher Weise auf die Unterseite eines Papierblattes, dem sogenannten CB-Blatt (coated back), aufgetragen. Dieses CB-Blatt steht mit einem sogenannten CF-Blatt (coated front) in Kontakt, bei dem die dem CB-Blatt zugewandte Oberfläche mit einem für den Farbbildner sauren Reaktionspartner beschichtet ist. Der saure Reaktionspartner kann z.B. ein säurebehandelter Ton, wie Montmorillonitton, oder auch ein niedrig-molekulares Phenolharz, wie ein Phenol-Formaldehyd-Novolak-Harz, sein. Handelt es sich bei dem sauren Reaktionspartner um eine in hydrophoben Ölen lösliche saure Verbindung, dann kann sie ebenfalls eingekapselt werden. Bei dem Druckvorgang werden die erwähnten Kapseln durch die Drucktypen zerschlagen. Dadurch treten die Reaktionspartner miteinander in Kontakt und liefern auf dem CF-Blatt ein farbiges Zeichen. Die beiden Farbreaktionspartner können auch auf der Oberfläche eines einzigen Blattes aufgebracht werden, um ein sogenanntes autogenes System (SC-Blatt (self-contained» zu erhalten. Hier empfiehlt es sich, beide Reaktionspartner einzukapseln, sofern der saure Reaktionspartner in dem Öl löslich ist, um eine unerwünschte vorzeitige Reaktion der Reaktionspartner auszuschließen.

Zur Herstellung der Mikrokapselhüllen von in Farbreaktionssystemen eingesetzten Mikrokapseln gibt es verschiedene Einkapselungsverfahren. Diese beruhen z.B. auf dem Einsatz von Gelatinekoazervat-, Polyisocyanat-, Polyamid- oder Aminoplast-Systemen. Das eingangs bezeichnete Verfahren geht von einem Aminoplast-System aus, bei dem z.B. ein wasserlösliches nicht-ionogenes Melamin-Formaldehyd-Vorkondensat durch saure Katalyse unter Ausbildung der M ikrokapsel hülle kondensiert wird. Dieses Verfahren hat in jüngster Zeit ansteigende Bedeutung erlangt. Es ist relativ leicht steuerbar und läuft unter vergleichsweise milden Reaktionsbedingungen ab, so daß selbst sehr empfindliche Farbbildner im Verlaufe der Reaktion unbeeinträchtigt bleiben.

Detailliert wird ein Verfahren zur Herstellung von Mikrokapseln in der DE-PS 3 545 803 beschrieben, das zu einer besonders stabilen ÖI-in-Wasser-Dispersion führt, indem die wässrige Lösung eines kationaktiven Melamin-Formaldehyd-Vorkondensats und die eines organischen Polymerisats unter starkem Rühren mit einem Hochleistungsdispergiergerät (z.B. auf dem Rotor-/Stator-Prinzip beruhend) zur Einstellung optimaler Turbulenzen und unter Ausschluß störender laminarer Verhältnisse gemischt werden. Hierdurch wird das ursprünglich gelöste kationisierte Melamin-Formaldehyd-Vorkondensat in Gegenwart der wässrigen Lösung eines wasserlöslichen Polymerisats in feinster Suspension ausgeschieden. Diese feinstsuspendierten Teilchen führen zu einer besonders günstigen Stabilisierung der ÖI-in-Wasser-Dispersion, in der die Mikrokapselhülle vorwiegend durch Kondensation des wasserlöslichen nicht-ionogenen Melamin-Formaldehyd-Vorkondensats gebildet wird.

Die DE-PS 3 545 803 beschreibt ein Verfahren, das ein wasserlösliches Polymerisats in der ersten Verfahrensstufe einsetzt. In Gegenwart dieses Polymeren wird das kationisierte Melamin-Formaldehyd-Vorkondensat in feinster Suspendierung zur Ausfällung gebracht. Polymere mit funktionellen Gruppen, wie sie in der DE-PS 3 545 803 beschrieben werden, sind seit längerem bekannt. Hierzu zählen insbesondere Säure-, Amid-, Amino-, Imino-, Ester-, Ether-, Hydroxyl-, Urethan-, Thiol- oder Mercaptan-Gruppen tragende Polymere. Bevorzugte Beispiele für derartige Polymerisate sind Polyvinylalkohol, Gelatine und Maleinsäureanhydrid-Copolymere, insbesondere Ethylen/Maleinsäureanhydrid-Copolymerisate oder Styrol/Maleinsäureanhydrid-Copolymerisate, Stärke, Zellulosederivate, wie Carboxymethylzellulose (CMC) oder Hydroxyethylzellulose (HEC), Alginate, wie Natriumalginat, Polyurethane oder Polyethylenoxid. Von ganz besonderem Vorteil hat sich bei diesen Verfahren als wasserlösliches organisches Polymerisat das Acrylamid/Acrylsäure-Copolymer erwiesen.

Für die Bewertung der vorliegenden Erfindung ist der Stand der Technik nach der europäischen Patentschrift 0 026 914 der Firma BASF von Bedeutung. Auch darin wird bereits der Einsatz von sulfonierten Polymeren beschrieben. Hierbei handelt es sich allerdings um Sulfonsäuregruppen tragende Homo- oder Copolymerisate, die frei von Phenyl- und/oder Sulfophenylgruppen sind. Typische Vertreter dieser Polymerengruppe sollen Polysulfoethyl(meth)-acrylat, Polysulfopropyl(meth)acrylat, Polymaleinimid-N-äthansulfonsäure oder Poly-2-acrylamido-2-methyl-propansulfonsäure sein.

Sämtliche bekannten Verfahren, die zu ihrer Durchführung ein filmbildendes, wasserlösliches Polymer benötigen, gewährleisten nicht die Gewinnung von Einzelkapseln durch übliches Sprühtrocknen. Vielmehr führt der überschüssige Polymeranteil dazu, daß sich regelmäßig Agglomerate bilden. Agglomerate vermindern die Schreibqualität von Reaktionsdurchschreibepapieren, wenn die sprühgetrockneten Kapseln durch Redispergierung in nicht wässrige verdruckbare Medien eingearbeitet werden sollen.

Auch kann die Menge des einzukapselnden Materials in Form von beispielsweise Farbreaktionspartnern nicht wünschenswert erhöht werden, da hiermit eine Viskositätserhöhung in solche Bereiche eintritt, die eine praktikable Ausführung des Verfahrens ausschließen.

Mit den nach den oben beschriebenen bekannten Verfahren hergestellten bzw. von dem wässrigen Anteil befreiten Einzelkapseln für Farbreaktionssysteme wurden bereits verdruckbare Bedien vorgestellt, wobei das Drucken z.B. in den Bereichen Flexodruck, Siebdruck, Naß- oder Trockenoffsetdruck und Tiefdruck erfolgte, insbesondere zum segmentartigen Drucken. Der bereits angesprochene Nachteil der Schreibqualität der erhaltenen Durchschreibepapiere stellt aufgrund des großen Anteils an agglomerierten Mikrokapseln nicht zufrieden.

Die Bildung agglomerierter Mikrokapseln wird auch nicht durch den Vorschlag der DE-A 2 233 428 behoben, bei dem trockene Kapseln durch spontane Polymerisation und Trocknung mittels Sprühtrocknung erhalten werden. Die Agglomeratbildung wird ausdrücklich angesprochen.

Der Erfindung lag daher die Aufgabe zugrunde, das eingangs bezeichnete Verfahren so weiterzubilden, daß eine Stabilisierung der erwähnten ÖI-in-Wasser-Dispersion ohne wasserlösliche filmbildende Verbindungen, insbesondere ohne ein filmbildendes wasserlösliches Polymerisat, möglich ist und der Wirkstoffanteil erhöht werden kann, ohne daß gleichzeitig die Viskosität der ÖI-in-Wasser-Dispersion in technologisch nicht handhabbare Bereiche angehoben wird. Darüber hinaus sollen durch dieses Verfahren ohne weiteres redispergierbare Einzelkapseln verbesserter Qualität erzeugt und vorteilhafte Anwendungsbereiche hierfür erschlossen werden.

Diese Aufgabe wird erfindungsgemäß dadurch gelöst, daß in das wässrige Medium ein wasserlösliches, anionisches, sulfoniertes Melamin-Formaldehyd-Vorkondensat, das pro Melaminring im Mittel etwa 2 bis 4 Methylolgruppen aufweist sowie eine solche wasserlösliche, nicht-filmbildende kationische Verbindung eingebracht werden, daß die wasserlösliche, nicht-filmbildende kationische Verbindung in Wechselwirkung mit dem wasserlöslichen anionischen, sulfonierten Melamin-Formaldehyd-Vorkondensat eine dispersionsstabilisierende Verbindung bildet.

Das Wesen des erfindungsgemäßen Verfahrens besteht demzufolge in dem Einsatz eines wasserlöslichen anionischen, sulfonierten Melamin-Formaldehyd-Vorkondensates in Verbindung mit einem solchen nicht-filmbildenden, kationischen Reaktionspartner, der in Wechselwirkung mit diesem speziellen Melamin-Formaldehyd-Vorkondensat eine emulsions- bzw. dispersionsstabilisierende Wirkung entfaltet. Hier die geeigneten nicht-filmbildenden kationischen Reaktionspartner zu ermitteln, ist dem Fachmann anhand einiger weniger Handversuche möglich.

Geeignete wasserlösliche anionische, sulfonierte Melamin-Formaldehyd-Vorkondensate sind im Stand der Technik bekannt. So geht ein solches Produkt beispielsweise aus der Zeitschrift "Zement.Kalk.Gips", Bauverlag, Wiesbaden, Jahrgang 21 (1968), Heft 10, S. 415-419 hervor.

Darin wird seine Eignung als verflüssigendes Mittel von Zementmörtel und Gips angesprochen. Zur Herstellung von Mikrokapseln ist es bisher noch nicht eingesetzt worden. Dieses Melamin-Formaldehyd-Vorkondensat läßt sich in folgender Weise optimieren: So enthält es vorzugsweise pro Melamin-Ring im Mittel etwa 0,7 bis 1,3 Sulfonatgruppen, insbesondere etwa 0,9 bis 1,1 Sulfonatgruppen. In dem Melamin-Ring sind im Mittel etwa 2 bis 4 Methylolgruppen, insbesondere etwa 2,5 bis 3,5 Methylolgruppen enthalten. Das Molekulargewicht dieses Melamin-Formaldehyd-Vorkondensats beträgt vorzugsweise etwa 3000 bis 300000, insbesondere etwa 5000 bis 100000. Im Idealfall würde das wasserlösliche anionische, sulfonierte Melamin-Formaldehyd-Vorkondensat folgende Struktur haben: 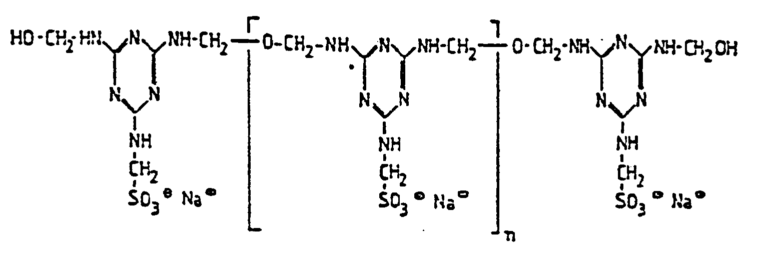 worin n vorzugsweise eine ganze Zahl zwischen etwa 8 bis 1000, insbesondere etwa 15 bis 350 darstellt. Dem Natriumion kommt in dieser Formel keine besondere Bedeutung zu. Vielmehr kann es durch beliebige andere Metallionen ersetzt werden, die die Wasserlöslichkeit dieses Vorkondensats gewährleisten. Vorzugsweise ist das wasserlösliche anionische, sulfonierte Melamin-Formaldehyd-Vorkondensat in der wässrigen Phase in einer Menge von etwa 0,3 bis 25 Gew.-% enthalten. Auf etwa 1 Gew.-Teil wasserlösliches anionisches, sulfoniertes Melamin-Formaldehyd-Vorkondensat entfallen vorzugsweise etwa 0,01 bis 10 Gew.-Teile wechselwirkende kationische Verbindungen, insbesondere 0,02 bis 5 Gew.-Teile und ganz besonders 0,1 bis 1 Gew.-Teil.

Unter dem hier gewählten Begriff "wechselwirkende kationische Verbindung" fallen vielfältige Verbindungen, so z.B. kationische Polyethylenimine, Polyamidoamine, Polyetheramine, Polyamidamin-Epichlorhydrine, Dicyanamid-Formaldehyd-Komplexe, modifizierte Alkylarylpolyglykolether, Fettsäureamidkondensationsprodukte, Amin-Amid-Formaldehyd-Kondensationsprodukte, Dicyandiamidderivate, Imidazolinderivate, Aminocarbonsäureester, quaternäre Esterammoniumverbindungen sowie kationisierte Melamin-Formaldehyd-Vorkondensate und andere kationisierte Aminoplastbildner, wie Aldehyd-Vorkondensate auf der Basis von Harnstoff, Thioharnstoff, N-Alkylharnstoff, Guanidin, Guanaminderivate, Guanamid und Alkyl-/Arylsulfonamiden.

Mit besonderem Vorteil werden kationisierte Melamin-Formaldehyd-Vorkondensate als wechselwirkender Reaktionspartner eingesetzt. Das im Handel unter der Bezeichnung Resin 4205@ erhältliche Erzeugnis (vertrieben von der Firma CECA Klebstoff GmbH & Co. KG, Offenbach, BRD) ist besonders geeignet. Es ist ein kationisierbares Melamin-Formaldehyd-Vorkondensat, das im neutralen pH-Bereich und darüber, insbesondere bei einem pH-Wert von etwa 5 und mehr in Wasser nicht löslich ist, so daß man ohne weiteres von "wasserunlöslich" sprechen kann. Dabei ist dieser Begriff "wasserunlöslich" für den Fachmann zur praktischen Verwirklichung der vorliegenden Erfindung ohne weiteres ausreichend. Derselbe Begriff oder vergleichbare Begriffe werden in einschlägigen Chemie-Nachschlagewerken benutzt, so nicht nur "wasserunlöslich", sondern auch "leicht wasserlöslich" und dergleichen, was sich beispielsweise aus der Literaturstelle D'Ans Lax "Taschenbuch für Chemiker und Physiker", Bd. 11, Org. Verbindungen, 1964, S. 2-57 ergibt. Chemisch-strukturell läßt sich das obige Handelsprodukt wie folgt beschreiben: es handelt sich um ein als Pulvermaterial vorliegendes Gemisch oligomerer, nicht modifizierter Melamin-Formaldehyd-Vorkondensate, die aus vorwiegend 2 bis 4 Melaminringen bestehen, wobei die Melaminringe durch Kondensation von Methylolgruppen vorwiegend über -CH2-O-CH2-Gruppierungen miteinander verbunden sind. Pro Melaminring liegen 3 bis 5 nicht modifizierte Methylolgruppen vor. Als bevorzugt kann es auch gelten, daß das kationisierte Melamin-Formaldehyd-Vorkondensat aus einem Oligomeren mit 2 bis 6 Triazinringen besteht, das pro Triazinring 2,5 bis 5 Methylolgruppen enthält und frei von Methylolethergruppen ist.

Um das für die Zwecke der Erfindung einzusetzende wasserunlösliche kationisierbare Melamin-Formaldehyd-Vorkondensat zu lösen und dabei in seine kationisierte bzw. protonisierte lösliche Form zu überführen, wird es vorzugsweise in eine relativ stark saure Lösung eingebracht, so in eine wässrige Lösung eines pH-Wertes von etwa 3,5 und weniger. Bei diesem pH-Wert ist seine Lösung langzeitig beständig. Wird der pH-Wert auf etwa 3,5 bis 4,5 angehoben, dann geht die Beständigkeit zurück, da vermutlich die gegenseitige elektroxstatische Abstoßung der Moleküle durch den Abzug von Protonen mehr und mehr aufgehoben wird. Wird der pH-Wert auf etwa 4,5, insbesondere etwa 5,0 und mehr angehoben, dann führt dies zu einer praktisch quantitativen Ausfällung des wasserunlöslichen (kationisierbaren) Melamin-Formaldehyd-Vorkondensats.

Es hat sich bei dem wasserunlöslichen kationisierbaren Melamin-Formaldehyd-Vorkondensat überraschenderweise gezeigt, daß dieses, entgegen den Erwartungen, unter den beschriebenen Fällungsbedingungen aufgrund der Zugabe des wasserlöslichen anionischen, sulfonierten Melamin-Formaldehyd-Vorkondensats nicht ausfällt, sondern offenbar in eine komplexe Wechselwirkung eintritt, die ein Ausfällen ausschließt. Überprüft man das Reaktionsmedium mit extremer Zentrifugierung, dann zeigen sich keine Sedimente. Auch ist das Reaktionsmedium mit extrem feinporigen Filtermaterialien, wie beispielsweise einem Blaubandfilter, rückstandslos filtrierbar. Dieses trifft in einem weiten pH-Bereich zu und somit auch in einem solchen pH-Bereich, in dem das kationisierbare Melamin-Formaldehyd-Vorkondensat normalerweise ausfallen würde.

Unter Anwendung von extrem ungünstigen Konzentrations- und/oder pH-Bedingungen kann es trotzdem zu Trübungserscheinungen kommen, die jedoch keinen Einfluß auf die Emulsions- bzw. Dispersionsstabilisierung ausüben.

Ändert man die Mengenverhältnisse durch Erhöhung der Menge des beschriebenen kationisierten Melamin-Formaldehyd-Vorkondensates oder arbeitet man in einem höheren pH-Bereich, kann es zur Ausfällung eines Festkörpers kommen, der jedoch keine negative Wirkung auf die Disperionsstabilisierung ausübt. Ähnliches gilt auch für andere kationisierte Verbindungen, die vorstehend in den Substanzklassen aufgeführt sind.

Die Konzentration des kationisierten Melamin-Formaldehyd-Vorkondensats in wässriger Lösung liegt bei üblichen Handelsprodukten im allgemeinen in dem Bereich von etwa 9 bis 12 Gew.-%, wobei ein Wert von etwa 10 Gew.-% bevorzugt wird. Deren pH-Wert liegt, wie bereits angesprochen, bei vorzugsweise etwa 1,5 bis 3,0, wobei die Acidität durch Verwendung von z. B. Salz-, Phosphor- oder Ameisensäure je nach Verwendungszweck eingestellt wird.

Kern der Erfindung ist nicht die Art und Weise, wie die Aminoplastkapselhülle letztlich ausgebildet wird. Hierbei kann nach üblichen Techniken vorgegangen werden. So können beispielsweise die Aminoplaste bestehen aus Aldehydkondensaten auf der Basis von Melamin, Harnstoff, Thioharnstoff, N-Alkylharnstoff, Guanidin, Acetoguanamin, Benzoguanamin, Caprinoguanamin, Cyanamid, Dicyandiamid und Alkyl-/Arylsulfonamid. Bevorzugter Aldehyd ist Formaldehyd; es können aber auch höhere Aldehyde zum Einsatz kommen. Zur Ausbildung der Aminoplastkapseln wird vorzugsweise ein wasserlösliches nicht-ionogenes Melamin-Formaldehyd-Vorkondensat verwendet, das insbesondere ein partiell mit Methanol verethertes Melamin-Formaldehyd-Vorkondensat darstellt. Ähnlich vorteilhaft kann zur Ausbildung der Aminoplastkapseln ein Harnstoff-Formaldehyd-Vorkondensat, eine Mischung von Melamin-Formaldehyd-Vorkondensaten und Harnstoff-Formaldehyd-Vorkondensaten verwendet werden.

Es hat sich gezeigt, daß zur Ausbildung der Aminoplast-Kapselhülle nicht-ionogene Melamin-Formaldehyd-Vorkondensate besonders gut geeignet sind. Hieran sind verschiedene Anforderungen zu stellen. Zunächst muß es wasserlöslich sein. Ferner sollte es eine herabgesetzte Eigenreaktionsfähigkeit aufweisen. Die Herabsetzung der Reaktivität läßt sich durch zumindest partielle Blockierung der aktiven Methylolgruppen erreichen. Hierzu geeignete Verfahren sind bekannt (vgl. "Kunststoffhandbuch", Bd. X, Duroplaste, S. 173). So kann die gewünschte Reaktivität des nicht-ionogenen oligomeren Melamin-Formaldehyd-Vorkondensats durch partielle Methylierung eingestellt werden. In der europäischen Patentschrift 0 026 914 wird ein solches Produkt beschrieben, das z.B. pro Mol Melamin 5,25 Mole Formaldehyd und 2,3 Mole Methylethergruppen enthält. Diesen Anforderungen genügen im wesentlichen die Handelsprodukte Madurit MW 112@ der Firma Cassella AG (vgl. hier "Kunstharze Hoechst, Technisches Merkblatt", Ausgabe September 1982), BC 336@ der BIP Chemicals Limited und Resin 42 - 91@ der Rousselot GmbH.

Durch die Herabsetzung der Reaktionsfähigkeit des nicht-ionogenen Melamin-Formaldehyd-Vorkondensats wird es gewährleistet, daß der Einkapselungsvorgang nicht zu schnell abläuft. Damit wird eine unerwünschte Agglomeratbildung bzw. das Ausflocken größerer Teilchen zurückgedrängt. Agglomerate bzw. größere Teilchen führen z.B. bei Mikrokapseln mit einem eingekapselten Farbreaktionspartnervon Farbreaktionssystemen in Reaktionsdurchschreibepapieren z.B. zu einer undeutlichen Schrift. Nicht-ionogene methylierte Melamin-Formaldehyd-Vorkondensate des erwähnten Methylierungsgrades besitzen im allgemeinen die wünschenswerte Reaktivität und werden daher im Rahmen der Erfindung bevorzugt. Es lassen sich für die Zwecke der Erfindung auch Mischungen unterschiedlich reaktiver nicht-ionogener Melamin-Formaldehyd-Vorkondensate verwenden. In Einzelfällen kann es von Vorteil sein, die Reaktivität des zur Verfügung stehenden nicht-ionogenen Melamin-Formaldehyd-Vorkondensates zu steuern, was durch Zugabe von Formaldehyd geschehen kann.

Die Anwendungskonzentration der wässrigen Lösung der nicht-ionogenen Melamin-Formaldehyd-Vorkondensate kann in weitem Rahmen schwanken und liegt vorzugsweise bei der Konzentration von etwa 7 bis 20 Gew.-%, insbesondere bei etwa 12 Gew.-%.

Dem Fachmann ist geläufig, daß die Eigenschaften der Aminoplast-Kapselhülle einerseits durch die Ausgangssubstanz in Form des wasserlöslichen Aldehyd-Vorkondensates bzw. in Form der Gemische chemisch unterschiedlicher Vorkondensate (vgl. voranstehende Aufzählung) und andererseits durch die Verfahrensführung bzw. Kondensationssteuerung in hohem Maße beeinflußt werden können. In der Fachliteratur wird auf die Steuerungsparameter der Aminoplastkondensation, wie auf den pH-Wert, den Säuretyp, die Temperatur und Konzentration der Reaktionsharze bzw. die weiteren Bestandteile des Reaktionsmediums, verwiesen.

Das hydrophobe Öl, in dem z.B. der Farbbildner von Farbreaktionssystemen oder dessen saurer Reaktionspartner, sofern es sich hier um eine lösliche Verbindung (z.B. eine phenolische Verbindung) handelt, gelöst ist, ist gegenüber Wasser inert, d.h. es ist in Wasser praktisch unlöslich bzw. damit nicht mischbar. Eine geringe Löslichkeit ist vernachlässigbar. Bevorzugte Beispiele von Ölen, die erfindungsgemäß als Lösemittel oder Dispersionsmittel der einzukapselnden Substanz herangezogen werden können, sind insbesondere teilweise hydrierte Terphenyle, Chlorparaffine, alkylierte Biphenyle, Alkyinaphthaline, Diarylmethanderivate, Dibenzylbenzolderivate, Alkane, Cycloalkane und Ester, wie Phthalate, Adipate, Trimellitate und Phosphate, und Silikonöle.

Mit dem erfindungsgemäßen Verfahren können vielfältige Substanzen, seien sie in dem erwähnten hydrophoben Öl gelöst oder dispergiert, d.h. emulgiert, feinst-suspendiert und/oder kolloiddispers gelöst, eingekapselt werden. Das kann sich insbesondere um Farbreaktionspartner, insbesondere Farbbildner von Farbreaktionssystemen, Duft- und Aromastoffe, Geschmackstoffe, Vitamine, Düngemittel, Biozide, wie insbesondere Insektizide, Fungizide, Pestizide und Herbizide, Insektenlockstoffe, Reinigungsmittel, Lösemittel, Schmierstoffe, Leuchtfarbstoffe, Flüssigkristalle, Klebstoffe für Ein- und Mehrkomponentensysteme, Farbpigmentdispersionen und Magnetpigmentdispersionen in Öl- bzw. Wachsträgermaterialien handeln.

Von besonderer Bedeutung hat sich die vorliegende Erfindung bei der Mikroverkapselung von hydrophoben Ölen mit darin gelösten bzw. dispergierten Farbreaktionspartnern, insbesondere Farbbildnern, von Farbreaktionssystemen erwiesen. Zum Auflösen bzw. Dispergieren in den hydrophoben Ölen kommen vielfältige Farbbildner, die in der Fachliteratur detailliert beschrieben werden, in Frage. Beispiele hierfür sind Lakton-, Phthalid-, Fluoran-, Diphenylamin-, Spiropyran-, Auramin-, Phenothiazin-, Aminophenylpyridin- und Aminodiazaxanthenlakton-Derivate. Nachfolgend wird insbesondere detailliert auf diesen besonderen Anwendungsfall der vorliegenden Erfindung eingegangen. Es sei jedoch ausdrücklich darauf hingewiesen, daß die nachfolgenden Ausführungen entsprechend auch für die Einkapselung beliebigergeeigneter Substanzen gelten sollen. So könnte man in diesen Fällen durchaus den Begriff "Farbbildner" in der nachfolgenden Beschreibung durch "Substanz" ersetzen. Es besteht auch die Möglichkeit, daß der Begriff "Farbbildner" ganz entfällt und die beschriebenen Verfahrensweisen sich allein auf die Einkapselung eines speziellen hydrophoben Öls beziehen, so beispielsweise eines öligen Flüssigkristalls. Demzufolge soll die nachfolgende Beschreibung stets gleichzeitig als Offenbarung zur Einkapselung beliebiger geeigneter Substanzen gelten.

Die Gewichtsverhältnisse, in denen die beiden wechselwirkenden Reaktionspartner, d.h. die kationisierte Verbindung einerseits und das erfindungsgemäße wasserlösliche anionische, sulfonierte Melamin-Formaldehyd-Vorkondensat andererseits, eingesetzt werden, sind nicht kritisch. Diese Verhältnisse können in Abhängigkeit vom Molekulargewicht und der positiven Ladungsgröße des kationischen Produktes weiten Schwankungen unterliegen. Der Fachmann kann die optimalen Verhältnisse in Abhängigkeit von der Art der eingesetzten Materialien und ihrer Konzentration in dem jeweiligen wässrigen Medium im Rahmen geeigneter Vorversuche ohne weiteres ermitteln. Es wird bevorzugt, daß das erfindungsgemäße sulfonierte Melamin-Formaldehyd-Vorkondensat gegenüber dem wechselwirkenden kationisierten Partner in deutlichem Überschuß vorliegt. Vorzugsweise entfallen auf etwa 1 Gew.-Teil wasserlösliches anionisches, sulfoniertes Melamin-Formaldehyd-Vorkondensat etwa 0,02 bis 5 Gew.-Teile, insbesondere 0,05 bis 1,5 Gew.-Teile wechselwirkender Reaktionspartner.

Im einzelnen wird bei der Durchführung des erfindungsgemäßen Verfahrens unter Heranziehen. der obengenannten Ausgangsmaterialien vorzugsweise wie folgt vorgegangen: eine etwa 1 bis 25, vorzugsweise etwa 4 bis 10 gew.-%ige wässrige Lösung des wasserlöslichen anionischen, sulfonierten Melamin-Formaldehyd-Vorkondensats wird in einer solchen Menge mit einem kationisierten bzw. kationisierbaren und an sich wasserunlöslichen Melamin-Formaldehyd-Vorkondensat (gelöst in einem wässrigen Medium eines pH-Wertes von etwa 2,5) versehen, daß die Konzentration der letzteren Verbindung etwa 0,3 bis 3 Gew.-% beträgt. Der pH-Wert der entstandenen Lösung liegt dann bei etwa 4,5 bis 5,5. Anschließend wird das einzukapselnde Material bzw. das hydrophobe Öl, in dem der Farbreaktionspartner gelöst ist, unter starkem Rühren mit einem Hochleistungsdispergiergerät in diese wässrige Lösung eingerührt. Dabei kann es sich um ein solches Gerät handeln, wie es beispielsweise in der DE-PS 3 545 803 beschrieben wird.

Der anzustrebende Öltröpfchendurchmesser in der ÖI-in-Wasser-Dispersion sollte zwischen etwa 2 und 10 Mikrometern, bevorzugt zwischen 4 und 6 Mikrometern liegen. Dieser Durchmesser begünstigt ein gleichmäßiges Verhalten der mittels der gewonnenen Mikrokapseln hergestellten Farbreaktionssysteme, insbesondere der Farbreaktionsschreibpapiere. Werden Kapseln für andere als Farbreaktionspapieranwendungen hergestellt, kann der Kapseldurchmesser auch erheblich größer sein und an einige hundert Mikrometern heranreichen. Das jeweils gewählte Verhältnis von Ölphase zu dem Feststoffanteil der wässrigen Phase ist nicht kritisch. Bei Farbreaktionspapierkapseln liegt dieses Gewichtsverhältnis zwischen etwa 2:1 und 9:1, insbesondere zwischen etwa 4:1 und 5:1. Bei Kapseln für andere Anwendungsbereiche können die Gewichtsverhältnisse gemäß dem Anforderungsprofil von den genannten Zahlen erheblich abweichen.

Nach oder vor dem Zumischen der Ölphase wird die Mischung bzw. die ÖI-in-Wasser-Dispersion im Hinblick auf die bei der späteren Bildung der Kapselhülle ablaufenden Kondensationsreaktion, die durch Säuren katalysiert wird, sauer eingestellt. Hierzu können anorganische oder organische Säuren herangezogen werden, sofern sie ausreichende Azidität aufweisen und zu keinen störenden Nebeneffekten Anlaß geben, insbesondere den in dem hydrophoben Öl gelösten Farbbildner nicht nachteilig beeinflussen. Essigsäure, Ameisensäure, Zitronensäure, Salzsäure oder auch Schwefelsäure werden hierzu bevorzugt verwendet. Der für die Kondensationsreaktion optimale pH-Wert liegt im allgemeinen im schwach sauren Bereich, insbesondere zwischen etwa 3 und 6. Bevorzugt wird der Bereich von etwa 3,5 bis 5. Zu hohe pH-Werte verlängern die Reaktionszeit, während zu niedrige pH-Werte zu vermeiden sind, da diese z.B. zu einer unerwünscht frühzeitigen Verfärbung des Farbbildners in der Mikrokapsel führen können.

In die in obiger Weise zubereitete Mischung wird beispielsweise die wässrige Lösung des nicht-ionogenen Melamin-Formaldehyd-Vorkondensates, das nachfolgend die Kapselhülle bildet, eingerührt. Hierfür sind übliche bekannte Rühreinrichtungen geeignet, die keine besonderen Rühr- bzw. Turbulenzwirkungen entfalten. Die erwähnten Hochleistungsdispergiergeräte dürfen hier nicht herangezogen werden, da sie die Ausbildung der Kapselhülle durch die Kondensationsreaktion des nicht-ionogenen Melamin-Formaldehyd-Vorkondensats gegebenenfalls unter Einbeziehung einer wasserlöslichen markromolekularen Substanz stören würden.

Die oben detailliert besprochenen Ausgangsmaterialien finden sich schließlich in Form einer reaktionsfähigen ÖI-in-Wasser-Dispersion bzw. -Emulsion, in der unter normalem Rühren während etwa 1 bis 5 Stunden, insbesondere etwa 2 bis 3 Stunden die Bildung der Kapselhülle der Mikrokapseln erfolgt. Diese Dispersion ist vollkommen stabil, was auf die beschriebene Wechselwirkung von wasserlöslichem anionischem, sulfoniertem Melamin-Formaldehyd-Vorkondensat und kationischem Reaktionspartner zurückgeht.

Da die erwähnten Kondensationsreaktionen, die zur Ausbildung der Mikrokapselwand führen, unter Wärmezufuhr beschleunigt ablaufen, kann es wünschenswert sein, die Temperatur der einzelnen Verfahrensstufen zu steuern bzw. einzuregeln, beispielsweise durch Erwärmen. Nach der Bildung des Reaktionsmediums wird dessen Temperatur im allgemeinen zunächst auf etwa 55°C gesteigert, um die Kondensationsreaktion und damit die Bildung der Wandung der Mikrokapseln zu optimieren. Dieser Vorgang ist regelmäßig nach einer zweistündigen Reaktion bei etwa 55°C, bei den obengenannten bevorzugten Bereichen des pH-Wertes, annähernd abgeschlossen. Bei einer Temperatur von weniger als 55°C erhält man im allgemeinen dennoch qualitativ zufriedenstellende Mikrokapseln, wobei allerdings, wie bereits ausgeführt, eine längere Reaktionsdauer erforderlich ist. Es läßt sich auch bei Temperaturen arbeiten, die unter oder auch über etwa 55°C leigen. Im Rahmen einfacher Routineversuche kann die besonders günstige Reaktionstemperaturfürden jeweiligen Einzelfall ohne weiteres ermittelt werden.

Dem Reaktionsmedium können auch verschiedene Additive beigefügt werden, so beispielsweise ein Ammoniumsalz, wie Ammoniumchlorid, das die Kondensationsreaktion in einigen Fällen beschleunigt.

Wenn die Kondensationsreaktion in dem gewünschten Ausmaß abgelaufen ist, wird der pH-Wert durch Zugabe von Alkalien, insbesondere von Natriumhydroxid, Kaliumhydroxid oder Ammoniumhydroxid, neutral oder schwach alkalisch eingestellt. Hierdurch wird eine weitere Reaktion weitgehend ausgeschlossen, die bei der Lagerung der Mikrokapseln zu einer Agglomeratbildung führen könnte. Auch wird der Korrosionseinfluß des sauren Mediums auf metallische Reaktionsgefäße behoben. Bei Verwendung von Ammoniumhydroxid wird vorhandener freier Formaldehyd als geruchlose Additionsverbindung aus dem Reaktionssystem weitgehend entfernt.

Das erfindungsgemäße Verfahren kann chargenweise, aber auch kontinuierlich geführt werden. Bei dem kontinuierlichen Vorgehen wird die zu Verfahrensbeginn erhaltene wässrige Lösung, die die stabilisierenden, wechselwirkenden Reaktionspartner enthält, beispielsweise unmittelbar nach ihrer Herstellung mittels eines Hochleistungsdispergiergerätes mit der den Farbreaktionspartner enthaltenden Ölphase gemischt und danach in eine Rührkesselkaskade, in der die Kondensationsreaktion abläuft, geleitet, wobei in dem ersten Rührkessel die wässrige Lösung des nicht-ionogenen Melamin-Formaldehyd-Vorkondensates zudosiert werden kann. In der Praxis bietet es sich auch an, die Reaktionsmischung zunächst in einen größeren Einrührkessel einzuleiten. Sobald dieser Kessel gefüllt ist, wird das frische Reaktionsmedium in einen zweiten Rührkessel geleitet, während die Reaktion in dem ersten Rührkessel zum Abschluß gebracht wird. Die fertige Kapseldispersion wird entnommen. Anschließend kann wieder frisches Reaktionsmedium zugeleitet werden, während die Kapselbildungsreaktion in dem zweiten Rührkessel abläuft. Dieses kontinuierliche Verfahren soll nur als ein Beispiel angesehen werden, das vielfältige Modifikationen erfahren kann.

Nach Bildung der fertigen wässrigen Kapseldispersion wird diese üblichen Verfahren zur Entfernung des wässrigen Anteils unterzogen. Dies kann beispielsweise dadurch geschehen, indem die wässrige Kapseldispersion filtriert oder zentrifugiert oder der wässrige Anteil abgedampft oder sprühgetrocknet wird. Das Sprühtrocknen ist hier ein besonders geeignetes Verfahren. Es wird beispielsweise in Römpps Chemie-Lexikon, 7. Aufl., Bd. 6,1977, S. 3693/3694 beschrieben. Es fallen in jedem Fall die wünschenswerten Einzelkapseln an. Es gibt auch die Möglichkeit, die wässrige Dispersion zunächst in ein anderes wasserfreies Medium zu überführen und den wässrigen Anteil aus diesem zu entfernen, so daß die Einzelkapseln in dem neuen Medium dispergiert vorliegen. Als Beispiel eines solchen Vorgehens kann das Flushing-Verfahren angegeben werden, das beispielsweise in Römpps Chemie-Lexikon, 8. Aufl., Bd. 2,1981, S. 1346/1347 beschrieben wird.

In jedem Fall, unabhängig von derart der Abtrennung des wässrigen Anteils, fallen erfindungsgemäß, anders als im vorstehend geschilderten Stand der Technik, Einzelkapseln mit den damit verbundenen Vorteilen an. Dies läßt sich anhand eines üblichen Meßverfahrens zur Partikelgrößenbestimmung, z. B. mit dem Laserbeugungsverfahren nachweisen.

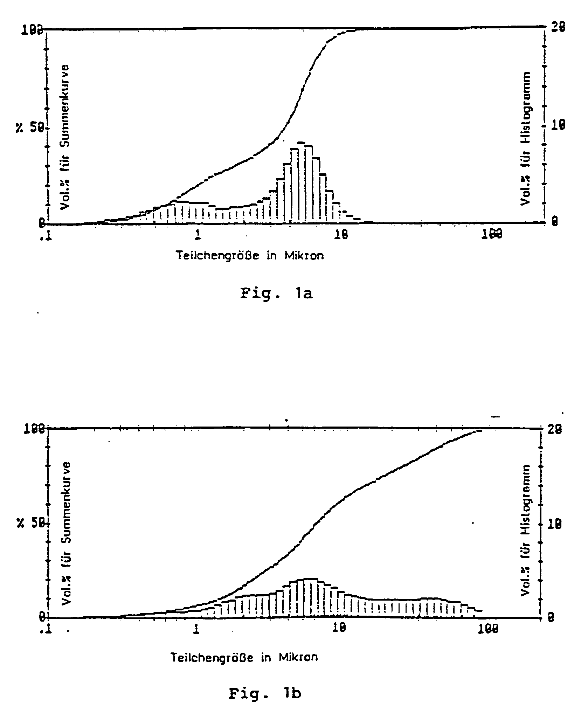

Eine handelsübliche wässrige Aminoplastkapseldispersion zeigt zwar, wie die nachfolgende Figur 1a ausweist, eine brauchbare Teilchengrößenverteilung der Mikrokapseln. Redispergiert man allerdings die durch Sprühtrocknung aus dieser handelsüblichen wässrigen Dispersion gewonnenen Mikrokapseln in einem wasserfreien oder nur geringe Anteile an Wasser enthaltenden Solventsystem, dann ergibt sich eine deutliche Verschiebung zu einem größeren Teilchendurchmesser, was auf eine starke Agglomerierung hinweist (vgl. Fig. 1b). Solche Erscheinungsbilder von sprühgetrockneten, in weitgehend nichtwässrigen Solventsystemen redispergierten Mikrokapselpulvern sind typisch für Mikrokapseln, die nach dem Stand der Technik als wässrige Dispersion hergestellt worden sind.

Derartige Agglomerate führen beim Drucken zur Herstellung von Farbreaktionsdurchschreibepapieren zu einer verminderten Schreibqualität. Der Einsatz der wässrigen Einzelkapseldispersion des erwähnten Handelsproduktes bei segmenthaften Spotdruckverfahren hat den Nachteil, daß trotz der akzeptablen Teilchengrößenverteilung die Papierbahn beim Drucken ein unverwünschtes Aufquellen zeigt.

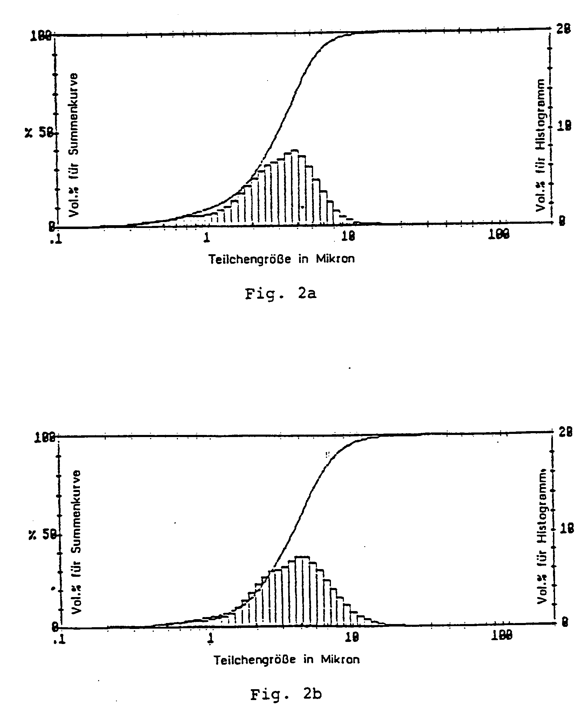

Führt man die oben beschriebenen Messungen zur Ermittlung der Kapseldurchmesser-Verteilungskurve anhand der durch das erfindungsgemäße Verfahren erhaltenen wässrigen Dispersion und auch mit den nach Abtrennung des wässrigen Anteils erhaltenen Einzelkapseln durch, dann ergeben sich die in den nachfolgenden Figuren 2a und 2b wiedergegebenen Verteilungskurven. Es zeigt sich hier, daß bei den verglichenen Kurven praktisch Deckungsgleichheit vorliegt. Dadurch wird belegt, daß die nach dem erfindungsgemäßen Verfahren enthaltenen Mikrokapseln als Einzelkapseln redispergierbarsind. Diese Redispergierbarkeit kann auch in nicht-wässrigen Druckfarben mit dem Ergebnis erfolgen, daß das erwähnte nachteilige Quellen des bedruckten Papiers nicht mehr auftritt.

Daß mit den erfindungsgemäßen Einzelkapseln anhand von Druckfarben verbesserte Schreibqualitäten erzielbar sind, kann wie folgt belegt werden: Das im Handel erhältliche Aminoplast-Mikrokapselpulver sowie die nach dem folgenden Beispiel I erfindungsgemäß erhaltenen Einzelkapseln wurden in eine Druckfarbe eingebracht, die aus 30 Gew.-% Kapselpulver, 12 Gew.-% Polyvinylpyrrolidon und 58 Gew.-% Ethanol bestand. Diese Druckfarbe wurde mittels einer Flexodruckmaschine auf ein handelsübliches Rohpapier von 52 g/m² aufgedruckt. Der erzielte Auftrag der Druckfarben lag bei 3,9 g/m², Ein visuell oder mikroskopisch durchgeführter Schriftschärfevergleich führte bei dem handelsüblichen Kapselpulver zu einer unscharfen, aufgerasterten Schrift, während die erfindungsgemäßen Kapseln einen scharfen, zusammenhängenden Schriftzug lieferten. Ein in der Tendenz gleiches Ergebnis bezüglich der Schriftschärfe wurde mit auf Wachsbasis aufgebauten Hot-Melt-Druckfarben erhalten, die neben 45 Gew.-% Kapselpulver28 Gew.-% Paraffinwachs und 27 Gew.-% Carnaubawachs enthielten und mittels einer Heißkarbonmaschine als 4,1 g/m² Auftrag auf das vorstehend beschriebene Rohpapier aufgedruckt wurden.

Technologisch lässt sich die vorliegende Erfindung wie folgt erläutern: Durch die Wechselwirkung des erfindungsgemäßen wasserlöslichen anionischen, sulfonierten Melamin-Formaldehyd-Vorkondensats mit dem kationischen Reaktionspartner, insbesondere in Form des im sauren wässrigen Medium gelösten kationisierbaren Melamin-Formaldehyd-Vorkondensats, scheint ein Komplex zu entstehen, der wasserlöslich ist und die gewünschte Stabilisierung derÖl-in-Wasser-Dispersion bewirkt. Hierbei befindet sich das erfindungsgemäße wasserlösliche anionische, sulfonierte Melamin-Formaldehyd-Vorkondensat gegenüber seinem wechselwirkenden Reaktionspartner vorzugsweise in deutlichem Überschuß. Somit könnte man daraus folgern, daß der stabilisierende Komplex anionischen Charakter hat bzw. die Summe der Wechselwirkungen sich anionisch auswirkt. Das erfindungsgemäße wasserlösliche anionische, sulfonierte Melamin-Formaldehyd-Vorkondensat allein zeigt die Stabilisierungswirkung nicht.

Die Löslichkeit des stabilisierenden Komplexes ist in gewissem Maße abhängig von einerseits den Konzentrations- und pH-Bedingungen des Mediums und andererseits von dem chemischen Charakter des kationaktiven/kationisierten Moleküls. Es hat sich aber gezeigt, daß eine Trübung oder Ausfällung der Emulsions- bzw. Dispersionsstabilisierung nicht entgegenwirkt.

Die besonderen Vorteile des erfindungsgemäßen Verfahrens bestehen darin, daß es nicht mehr den Einsatz von filmbildenden, wasserlöslichen Polymerisaten benötigt, die z. B. bei der Sprühtrocknung der Kapseldispersion zu Kapselagglomeraten führen, die die Schreibqualität der Reaktionsdurchschreibepapiere beeinträchtigen. Dieses trifft für die erfindungsgemäß gewonnenen Mikrokapseln nicht zu. Da man ein spezielles wasserlösliches Polymerisat ausschließen kann, ist man in der Wahl des Bindemittels, das zur Ausbildung der Kapselbeschichtung auf dem Trägerpapier erforderlich ist, frei. Schließlich läßt sich bei einer besonderen Ausgestaltung des erfindungsgemäßen Verfahrens, bei dem in einem späteren Verfahrensstadium allein das erfindungsgemäße anionische, sulfonierte Melamin-Formaldehyd-Vorkondensat hinzugegeben wird, die Viskosität steuern, nämlich herabsetzen. Dies ermöglicht eine deutliche Anhebung des Ölanteils und damit des Anteils der darin enthaltenen Substanz im Reaktionssystem und damit auch der Ausbeute an Mikrokapseln pro Volumeneinheit. Somit kann in einer Anlage pro Zeiteinheit mehr aktive Mikrokapselmasse gebildet werden. Ferner ist das wasserlösliche anionische, sulfonierte Melamin-Formaldehyd-Vorkondensat ein handelsübliches billiges Produkt.

Das erfindungsgemäße Verfahren zeigt gegenüber den eingangs geschilderten bekannten Verfahren auch apparatetechnische Vorteile. So ist in einer bevorzugten Ausführungsform zu Verfahrensbeginn kein Hochleistungsdispergiergerät erforderlich, sondern lediglich zur Herstellung der Emulsion. Da das erfindungsgemäße Verfahren die Gewinnung von qualitativ hochwertigen trockenen Einzelkapseln ermöglicht, können diese in unterschiedlichste Medien eingebracht werden, um mit diesen auf geeignete Träger aufgetragen zu werden. Hiermit werden neue Anwendungsbereiche erschlossen. Die Verfahren des Standes der Technik, die auf den Einsatz wasserlöslicher Polymerisate beruhen, schließen, da bei der Isolierung der Kapseln Agglomeratbildung auftritt, derartige Einsatzmöglichkeiten aus.

Aufgund der Tatsache, daß die erfindungsgemäßen Mikrokapseln im wesentlichen Einzelkapseln darstellen und somit die nachteiligen Agglomerate weitestgehend ausgeschlossen sind, eignen sich diese nach Redispergieren in vorteilhaften Lösungsmitteln, wie aliphatischen C₁- bis C₄-Alkoholen, cycloaliphatischen, paraffinischen und isoparaffinischen Kohlenwasserstoffen, halogenierten Kohlenwasserstoffen, niedrigen Alkylethern und -estern, im Falle von eingekapselten Farbbildnern besonders gut zum störungsfreien Drucken (Ausschluß vom Quellen des Papiers, verbesserte Schreibqualität), insbesondere zum segmentartigen Drucken, z.B. in den Bereichen des Flexodrucks, Siebdrucks und Tiefdrucks, um nur dort einen Kapselauftrag vorzunehmen, wo später tatsächlich Durchschreibevorgänge ablaufen. Die Wahl des optimalen Lösemittels richtet sich nach dem jeweiligen Druckverfahren. Analoge Aussagen gelten für die Herstellung von Offset- und Hot-Melt-Druckfarben. Unabhängig von der Art des oben beschriebenen nicht wässrigen Drucksystems sind die erfindungsgemäß erhaltenen Mikrokapseln darin stets als Einzelkapseln dispergierbar. Neben dem erwünschten Kostenvorteil der Spotdruckverfahren im Vergleich zur Vollflächenbeschichtung bzw. zum Vollflächendruck erhält der Druckerdie Möglichkeit, einen Formularsatz individuell gestalten zu können. Hierbei spielen neben kommerziellen Betrachtungen auch Fragen der ästhetischen Gestaltung sowie der Verwendbarkeit unterschiedlichster Trägermaterialien eine wesentliche Rolle.

Die Erfindung soll nachfolgend anhand verschiedener Beispiele noch näher erläutert werden:

### Beispiel 1:

10 Gew.-Teile einer 20%igen wässrigen Lösung eines sulfonierten Melamin-Formaldehyd-Vorkondensates wurden bei ca. 22°C mit 30 Gewichtsteilen Wasserverdünnt. Unter Rühren mit einem normalen Flügelrührer wurde 6,7 g einer wässrigen Lösung eines kationisierten Melamin-Formaldehyd-Vorkondensates hinzugegeben, die durch Auflösen von 0,5 g Resin 42-05 in einer Mischung von 6 g Wasser und 0,2 g 85%iger Ameisensäure erhalten wurde. Zu dieser Lösung von ca. 22°C wurde unter Rühren mit einem Hochleistungsdispergiergerät 27,2 g einer 45°C warmen öligen Phase gegeben, die durch Auflösen von 1,1 Gew.-% 1,3-Dimethyl-6-diethylaminofluoran, 0,4 Gew.-% Kristallviolettlacton, 0,2 Gew.-% 3,3-Bis-(1'-n-oktyl-2'-methyl-indol-3'-yl)-phthalid, 2,4 Gew.-% 2-Oktylamino-6-diethylamino-fluoran, 0,3 Gew.-% 9-N-Butyl-car- bazolyl-(3)-4',4"-bis-(N-methyl-,N-phenylamino)-diphenylmethan und 0,6 Gew.-% 10-Benzoyl-3,7-bis-(dimethylamino)-phenothiazin in Diisopropylnaphthalin erhalten wurde. Die resultierende stabile Emulsion von ca. 40°C wurde unter Weiterrühren mit einem normalen Flügelrührer mit einer Lösung aus 3 g Wasser und 1 g einer 85%igen Ameisensäure versetzt, wobei sich ein pH-Wert von ca 3,6 einstellte. Die auf diese Weise sauer eingestellte, stabile Emulsion wurde unter ständigem Rühren mit einer Wandbildnerlösung aus 12 g Resin 42-91 (60%ige Lösung eines methylierten Melamin-Formaldehyd-Vorkondensates in Wasser) und 5 g Wasser versetzt und anschließend ebenfalls unter Rühren auf 55°C erwärmt und während 4 Stunden bei dieser Temperatur gerührt. Nach dem Abkühlen auf Raumtemperatur und Einstellen des pH-Wertes auf pH 8,8 mittels 25%igen Ammoniakwassers fiel eine Kapseldispersion an, deren Kapseln einen Durchmesser von ca 3-8 Mikrometern aufweisen und die einen Trockengehalt von ca. 38 Gew.-% aufwies.

Die erhaltene Dispersion war hervorragend geeignet zur Verwendung bei der Herstellung von Farbreaktionspapier. Hier war das Hinzufügen von Bindemitteln erforderlich, da diese Kapseldispersion keinerlei Bindevermögen bzw. Haftvermögen auf dem Untergrund aufweist. Die Bindemittel können nach freier Wahl aus der umfangreichen Palette der wasserlöslichen Kolloide (Stärke und Derivate, Zellulosederivate, Acrylate etc.) oder der ebenso vielfältigen Produktpalette der Kunstharzlatices verwendet werden.

Die Kapseldispersion lieferte im Gegensatz zu herkömmlichen wässrigen Kapseldispersionen beim Eintrocknen auf Glas-, Metall-, Papieruntergründen keinen zusammenhängenden Film, sondern zerfiel bei geringster Kraftanwendung - hierzu genügt bereits der Luftzug eines Ventilators - in Kapselstaub, der im wesentlichen aus einzelnen Kapseln besteht. Eine solche Kapseldispersion eignet sich hervorragend zum Sprühtrocknen. Wegen des Vorliegens von Einzelkapseln war das nachfolgende Redispergieren des Kapselstaubes in unterschiedlichsten Medien sehr einfach zu bewerkstelligen. Wurde dieser Kapselstaub in Alkohol redispergiert, dann ergibt sich die in der nachfolgenden Figur 2b dargestellte Durchmesserverteilung, die mit der Durchmesserverteilung der oben beschriebenen wässrigen Dispersion nahezu deckungsgleich ist, was ein Vergleich mit der Verteilung nach der Figur 2a belegt. Derartige in Alkohol redispergierte Mikrokapseln lassen sich zum segmentartigen Drucken bei der Herstellung von Formularsätzen durch den Drucker einsetzen, wobei sich diese dadurch auszeichnen, daß sie eine gegenüber den bekannten Erzeugnissen deutlich verbesserte Schreibqualität liefern. Gleichermaßen günstig läßt sich eine in der beschriebenen Weise in nicht- wässrigen Systemen redispergierte Einzelkapselmasse mit besonderem Vorteil zur Herstellung von sogenannten SC-Papieren ("Self-Contained-Papieren") heranziehen.

### Beispiel 2:

Zu einer Lösung von Raumtemperatur, hergestellt durch Vermischen von 211,5 g Wasser und 88,8 g eine 20%igen wässrigen Lösung eines sulfonierten Melamin-Formaldehyd-Vorkondensates, wurden unter gelindem Rühren mit einem Flügelrührer 56 g einer kationisierten Melamin-Formaldehyd-Vorkondensat-Lösung ebenfalls von Raumtemperatur hinzugefügt; letzere Lösung wurde duch Auflösen von 3,5 g Resin Madurit MW 150, 51,2 g Wasser und 1,4 g 85%iger Ameisensäure gewonnen. Es resultierte eine durch BIaubandfiIterrückstandslos filtrierbare, beim Zentrifugieren mit 10.000 UpM kein Sediment liefernde, anionischen Charakter tragende Lösung. Zu dieser Lösung wurden unter Rühren mit einem Hochleistungsdispergiergerät 417,3 g einer ca. 42°C warmen Ölphase gegeben, die aus 156,5 g Chlorparaffin und 252 g Kerosin sowie insgesamt 8,8 g Farbbildner bestand. Als Farbbildner wurde ein Gemisch aus 75% Kristallviolettlakton und 25 % 9-N-Butyl-car- bazolyl-(3)-4',4"-bis-(N-methyl-,N-phenylamino)-diphenylmethan verwendet.

Die sich bildende Emulsion wies einen Tröpfendurchmesser von ca. 3 bis 10 Mikrometern auf, der sich bei den weiteren Verfahrensschritten nicht signifikant änderte.

Durch Hinzufügen von 33,5 g einer 20%igen wässrigen Ameinsensäure unter gelindem Rühren wurde das System auf einen sauren pH-Wert von ca. 3,4 eingestellt und anschließend 131 g einer Melamin-Formaldehyd-Vorkondensat-Harzlösung, gebildet aus 80 g Urecoll SMV und 51 g Wasser, hinzugegeben.

Nach Erwärmen der Emulsion auf 58°C und Halten der Temperatur während 3,5 Stunden unter leichtem Rühren hatte sich eine Kapseldispersion gebildet, die nach dem Abkühlen und Neutralisieren mittels 25%igem Ammoniakwasser bis auf den pH-Wert 8 Kapseln mit einem Durchmesser von ca 3 bis 10 Mikrometern aufwies und gleiche Eigenschaften, wie unter Beispiel 1 beschrieben, hatte (keine Haftung auf Untergründenverschiedener Art, keine Beschränkung in der Bindemittelwahl, einzelne Kapseln beim Sprühtrocknen oder Eintrocknenlassen der Dispersion, stabile Kapseln, gut geeignet zur Herstellung von Farbreaktionspapierbeschichtungsmassen). Der Trockensubstanzgehalt der Dispersion lag bei ca. 47 Gew.-%. Trotzdem lag die Viskosität bei nur 14 FB₄-Sekunden. Dieser Wert ist, gemessen an dem hohen Wirkstoffanteil der Dispersion, als extrem niedrig zu bezeichnen. Auch hier gelten die Ausführungen zu den vorteilhaften Anwendungsbereichen, die am Ende des vorausgegangenen Beispiels 1 beschrieben werden.

### Beispiel 3:

84 g einer 20%igen Lösung eines sulfonierten Melamin-Formaldehyd-Vorkondensates wurden mit 250 g Wasser verdünnt und unter Rühren 55 g einer wässrigen Lösung, gebildet aus 40 g Wasser und 15 g einer 20%igen Lösung eines kationisierten, modifizierten Polyethylenimins bei Raumtemperatur hinzugefügt.

Unter Verwendung eines Hochleistungsdispergiergerätes wurden bei Raumtempeartur 197 g eines Öls einemulgiert, das aus 90 % eines neutralen geruchsarmen, niedrigviskosen (ca. 30 mPas), wasserunlöslichen Trägeröls und 10 % eines künstlichen öligen Duftstoffes, der den Geruch von Rosenblüten wiedergibt, bestand.

Die Emulsion wies einen Tröpfendurchmesser von ca 3 bis 12 Mikrometer auf und blieb während der weiteren Verfahrensschritte stabil.

Durch Zugabe von 31 g 20%iger Ameisensäure unter Rühren mit einem Flügelrührer zu der Emulsion und weiterem Hinzufügen einer Lösung aus 50 g Wasser und 55 g einer 70%igen Lösung eines methylolierten Melamin-Formaldehyd-Vorkondensates und anschließendes Aufheizen auf 55°C und Halten dieser Temperatur während 4 Stunden hatte sich eine Kapseldispersion gebildet. Durch Abkühlen und Zugabe von 25%iger Ammoniaklösung wurde ein pH-Wert von 7,5 eingestellt. Anschließend wurden 7 g Ethylenharnstoff hingefügt. Nach 1 Stunde Rührzeit war der pH-Wert auf unter 7 abgefallen. Er wurde erneut mit Ammoniakwasser auf pH 7 eingestellt.

Die Kapseldisperion ließ sich zu einem sehr lockeren, extrem feinpulvrigen Material sprühtrocknen. Beim Zerreiben des Kapselpulvers entwickelte sich momentan ein intensiver Geruch nach frischen Rosenblüten.

### Vergleichsbeispiel 1

Das Beispiel 1 wurde wiederholt, jedoch ohne die kationisierte Melamin-Formaldehyd-Vorkondensat-Lösung einzusetzen. Unmittelbar nach Beendigung des Rührens mit dem Hochleistungsdispergiergerät brach die Emulsion zusammen. Das Öl sammelte sich zum Teil in Pfützen auf der Flüssigkeitsoberfläche. Es war nicht möglich, Kapseln herzustellen.

### Vergleichsbeispiel 2

Das Beispiel 2 wurde wiederholt, jedoch ohne die kationisierte Melamin-Formaldehyd-Vorkondensat-Lösung hinzuzufügen. Wie bei Beispiel 1 beschrieben, konnten keine brauchbaren Kapseln hergestellt werden.

### Vergleichsbeispiel 3

Das Beispiel 3 wurde wiederholt, ohne die kationisierte Polyethylenimin-Lösung hinzuzufügen. Wie bei den Beispielen 1 und 2 gezeigt, konnten keine Kapseln hergestellt werden, weil auch hier die Ölemulsion nicht stabil war.

## Patentansprüche

1. Verfahren zur Herstellung von Mikrokapseln durch Mikroverkapselung von hydrophoben Ölen, insbesondere mit darin enthaltenen Substanzen, wobei das hydrophobe Öl unter starkem Rühren in ein eine dispersionsstabilisierende Verbindung enthaltendes wäßriges Medium eingemischt wird und in der sauer eingestellen ÖI-in-Wasser-Dispersion nach Zugabe eines Aminoplastwandbildners in üblicher Weise Mikrokapseln gebildet werden und danach gegebenenfalls der wäßrige Anteil des wäßrigen Mediums entfernt wird, dadurch gekennzeichnet, daß in das wäßrige Medium ein wasserlösliches anionisches, sulfoniertes Melamin-Formaldehyd-Vorkondensat, das pro Melaminring im Mittel etwa 2 bis 4 Methylolgruppen aufweist, sowie eine solche wasserlösliche, nicht-filmbildende kationische Verbindung eingebracht werden, daß die wasserlösliche, nicht-filmbildende kationische Verbindung in Wechselwirkung mit dem wasserlöslichen anionischen, sulfonierten Melamin-Formaldehyd-Vorkondensat eine dispersionsstabilisierende Verbindung bildet.

2. Verfahren nach Anspruch 1, dadurch gekennzeichnet, daß das wasserlösliche anionische, sulfonierte Melmin-Formaldehyd-Vorkondensat pro Melamin-Ring im Mittel etwa 0,7 bis 1,3 Sulfonatgruppen aufweist.

3. Verfahren nach mindestens einem der Ansprüche 1 oder 2, dadurch gekennzeichnet, daß das Molekulargewicht des wasserlöslichen anionischen, sulfonierten Melamin-Formaldehyd-Vorkondensats etwa 3000 bis 300000 beträgt.

4. Verfahren nach Anspruch 3, dadurch gekennzeichnet, daß das Molekulargewicht des wasserlöslichen anionischen, sulfonierten Melamin-Formaldehyd-Vorkondensats zwischen etwa 5000 und 100000 liegt.

5. Verfahren nach mindestens einem der Ansprüche 1 bis 4, dadurch gekennzeichnet, daß das wasserlösliche anionische, sulfonierte Melamin-Formaldehyd-Vorkondensat in der wäßrigen Phase in einer Menge von etwa 0,3 bis 25 Gew.-% enthalten ist.

6. Verfahren nach mindestens einem der Ansprüche 1 bis 5, dadurch gekennzeichnet, daß auf etwa 1 Gew.-Teil wasserlösliches anionisches, sulfoniertes Melamin-Formaldehyd-Vorkondensat etwa 0,02 bis 5 Gew.-Teile wechselwirkende kationische Verbindung entfallen.

7. Verfahren nach mindestens einem der Ansprüche 1 bis 6, dadurch gekennzeichnet, daß die wechselwirkende kationische Verbindung ein an sich wasserunlösliches, nicht-filmbildendes, unter den Verfahrensbedingungen in Gegenwart des wasserlöslichen anionischen, sulfonierten Melamin-Formaldehyd-Vorkondensats lösliches kationisches Melamin-Formaldehyd-Vorkondensat ist.

8. Verfahren nach Anspruch 7, dadurch gekennzeichnet, daß das kationisierte Melamin-Formaldehyd-Vorkondensat aus einem Oligomeren mit 2 bis 6 Triazinringen besteht, das pro Triazinring 2,5 bis 5 Methylolgruppen enthält und frei von Methyloläthergruppen ist.

9. Verfahren nach mindestens einem der Ansprüche 1 bis 8, dadurch gekennzeichnet, daß zur Ausbildung der Aminoplastkapselhülle ein wasserlösliches nicht-ionogenes Melamin-Formaldehyd-Vorkondensat verwendet wird.

10. Verfahren nach Anspruch 9, dadurch gekennzeichnet, daß als wasserlösliches nicht-ionogenes Melamin-Formaldehyd-Vorkondensat ein partiell mit Methanol verethertes Melamin-Formaldehyd-Vorkondensat verwendet wird.

11. Verfahren nach einem der Ansprüche 1 bis 8, dadurch gekennzeichnet, daß zur Ausbildung der Aminoplastkapselhülle Harnstoff-Formaldehyd-Vorkondensate verwendet werden.

12. Verfahren nach einem der Ansprüche 1 bis 9, dadurch gekennzeichnet, daß zur Ausbildung der Aminoplastkapselhülle Mischungen von Melamin-Form aldehyd-Vorkondensaten und Harnstoff-Formaldehyd-Vorkondensaten verwendet werden.

13. Verfahren nach einem der Ansprüche 1 bis 8, dadurch gekennzeichnet, daß zur Ausbildung der Aminoplastkapselhülle neben Melamin-Formaldehyd-Vorkondensaten und/oder Harnstoff-Formaldehyd-Vorkondensaten andere Aminoplastbildner, wie Aldehyd-Vorkondensate auf der Basis von Thioharnstoff, N-Alkylharnstoff, Guanidin, Acetoguanamin, Benzoguanamin, Caprinoguanamin, Cyanamid, Dicyanamid und Alkyl-/Arylsulfonamid verwendet werden.

14. Verfahren nach mindestens einem der Ansprüche 1 bis 13, dadurch gekennzeichnet, daß es sich bei den in dem hydrophoben Ö I enthaltenen Substanzen um Farbreaktions^{p}artner von Farbreaktionssystemen, um Duft- und/oderAromastoffe, Geschmackstoffe, Vitamine, Düngemittel, Insektizide, Insektenlockstoff, Fungizide, Pflanzenschutzmittel, Reinigungsmittel, Lösungsmittel, Schmierstoffe, Leuchtstoffe, Flüssigkristalle, Klebstoffe für Ein- oder Mehrkomponentensysteme, Farbpigmentdispersionen oder Magnetpigmentdispersionen in Ö I- bzw. Wachsträgermaterialien handelt.

15. Mikrokapseln, erhältlich nach einem Verfahren nach mindestens einem der Ansprüche 1 bis 14.

16. Verwendung der Mikrokapseln nach Anspruch 15, in denen im hydrophoben Öl ein Farbreaktionspartner von Farbreaktionssystemen enthalten ist, insbesondere in Farbreaktionsaufzeichnungspapieren.

17. Verwendung nach Anspruch 16 zum segmentartigen Drucken.

18. Verwendung nach Anspruch 17 in weitgehend wasserfreien Druckverfahren zum Einsatz in den Bereichen Flexodruck, Siebdruck, Naß- und Trockenoffsetdruck und Tiefdruck.

## Claims

1. Process for the production of microcapsules by microencapsulating hydrophobic oils, particularly with substances contained therein, in which the hydrophobic oil is mixed, accompanied by vigorous stirring, into an aqueous medium containing a dispersion-stabilizing compound, the oil-in-water dispersion obtained is acid-adjusted and aminoplastic capsules are formed in the conventional manner, characterised in that the aqueous medium contains a water-soluble, anionic, sulphonated melamine-formaldehyde precondensate as well as such a water-soluble non-film-forming cationic compound that the water-soluble non-film-forming compound interacts with the water-soluble, anionic, sulphonated melamine-formaldehyde precondensate to form a dispersion-stabilizing compound.

2. Process according to claim 1, characterised in that the water-soluble, anionic, sulphonated melamine-formaldehyde precondensate has on average approximately 0.7 to 1.3 sulphonate groups per melamine ring.

3. Process according to at least one of claims 1 or 2, characterised in that the molecular weight of the water-soluble, anionic, sulphonated melamine-formaldehyde precondensate is approximately 3,000 to 300,000.

4. Process according to claim 3, characterised in that the molecular weight of the water-soluble, anionic, sulphonated melamine-formaldehyde precondensate is between approximately 5,000 to 100,000.

5. Process according to at least one of claims 1 to 4, characterised in that the water-soluble, anionic, sulphonated melamine-formaldehyde precondensate is contained in the aqueous phase in a quantity of approximately 0.3 to 25% by weight.

6. Process according to at least one of claims 1 to 5, characterised in that there are approximately 0.02 to 5 parts by weight of interacting cationic compound per approximately 1 part by weight of water-soluble, anionic, sulphonated melamine-formaldehyde precondensate.

7. Process according to at least one of claims 1 to 6, characterised in that the interacting cationic compound is a water-insoluble non-film-forming compound which, in the presence of the water-soluble, anionic, sulphonated melamine-formaldehyde precondensate, is a soluble cationic melamine-formaldehyde precondensate.

8. Process according to claim 7, characterised in thatthe cationized melamine-formaldehyde precondensate comprises an oligomer with 2 to 6 triazine rings and which contains 2.5 to 5 methylol groups per triazine ring and is free from methylol ether groups.

9. Process according to at least one of claims 1 to 8, characterised in that a water-soluble, non-ionic melamine-formaldehyde precondensate is used for forming the aminoplastic capsules.

10. Process according to claim 9, characterised in that a melamine-formaldehyde precondensate partly etherified with methanol is used as the water-soluble non-ionic melamine-formaldehyde precondensate.

11. Process according to at least one of claims 1 to 8, characterised in that urea-formaldehyde precondensates are used for forming the aminoplastic capsules.

12. Process according to at least one of claims 1 to 9, characterised in that mixtures of melamine-formaldehyde precondensates and urea-formaldehyde precondensates are used for forming the aminoplastic capsules.

13. Process according to at least one of claims 1 to 8, characterised in that, apart from melamine-formaldehyde precondensates and/or urea-formaldehyde precondensates, other aminoplastic forming agents, such as aldehyde precondensates based on thiourea, N-alkyl urea, guanidine, acetoguanamine, benzoguanamine, caprinoguanamine, cyanamide, dicyandiamide and alkyl/aryl sulphonamide are used for forming the aminoplastic capsules.

14. Process according to at least one of claims 1 to 13, characterised in that the substances contained in the hydrophobic oil are colour reactants of colour reaction systems, perfumes and aromatizing agents, flavouring agents, vitamins, fertilizers, insecticides, insect attractants, fungicides, plant protection agents, cleaning agents, solvents, lubricants, luminous paints, liquid crystals, adhesives for single or multi-component systems, paint pigment dispersions or magnetic pigment dispersions in oil or wax carrier materials.

15. Microcapsules obtainable according to a process according to at least one of claims 1 to 14.

16. Use of the microcapsules according to claim 15, which contain in the hydrophobic oil the colour reactant of colour reaction systems, in colour reaction recording papers.

17. Use according to claim 16 for segmental printing.

18. Use according to claim 17 in substantially anhydrous printing inks for use in flexographic, screen, wet and dry offset and intaglio printing.

## Revendications

1. Procédé de production de microcapsules par microencapsulation d'huiles hydrophobes, dans lesquelles en particulier des substances sont contenues, l'huile hydrophobe étant incorporée sous agitation intense dans un milieu aqueux contenant un composé stabilisant la dispersion et des microcapsules étant formées de manière classique dans la dispersion huile-dans-eau acidifiée, après addition d'un aminoplaste formant les parois, puis le cas échéant, la fraction aqueuse du milieu aqueux est éliminée, caractérisé en ce qu'on introduit dans le milieu aqueux un précondensat mélamine-formaldéhyde sulfoné anionique hydrosoluble qui présente en moyenne, par noyau de mélamine, environ 2 à 4 groupes méthylol, ainsi qu'un composé cationique hydrosoluble non filmogène, de nature telle que ce composé cationique hydrosoluble non filmogène forme un composé stabilisant la dispersion par interaction avec le précondensat mélamine-formaldéhyde sulfoné anionique soluble dans l'eau.

2. Procédé suivant la revendication 1, caractérisé en ce que le précondensat mélamine-formaldéhyde sulfoné anionique soluble dans l'eau présente en moyenne environ 0,7 à 1,3 groupe sulfonate par noyau de mélamine.

3. Procédé suivant au moins l'une des revendications 1 ou 2, caractérisé en ce que le poids moléculaire du précondensat mélamine-formaldéhyde sulfoné anionique hydrosoluble s'élève à environ 3000-300 000.

4. Procédé suivant la revendication 3, caractérisé en ce que le poids moléculaire du précondensat mélamine-formaldéhyde sulfoné anionique hydrosoluble se situe entre environ 5000 et 100 000.

5. Procédé suivant au moins l'une des revendications 1 à 4, caractérisé en ce que le précondensat mélamine-formaldéhyde sulfoné anionique hydrosoluble est présent dans la phase aqueuse en une quantité d'environ 0,3 à 25 % en poids.

6. Procédé suivant au moins l'une des revendications 1 à 5, caractérisé en ce qu'il y a environ 0,02 à 5 parties en poids de composé cationique susceptible d'interaction pour environ 1 partie en poids de précondensat mélamine-formaldéhyde sulfoné anionique hydrosoluble.

7. Procédé suivant au moins l'une des revendications 1 à 6, caractérisé en ce que le composé cationique susceptible d'interaction est un précondensat mélamine-formaldéhyde cationique lui-même insoluble dans l'eau, non filmogène, soluble dans les conditions du procédé en présence du précondensat mélamine-formaldéhyde sulfoné anionique hydrosoluble.

8. Procédé suivant la revendication 7, caractérisé en ce que le précondensat mélamine-formaldéhyde ca- tionisé est constitué d'un oligomère avec 2 à 6 noyaux de triazine, qui contient par noyau de triazine 2,5 à 5 groupes méthylol et qui est dépourvu de groupes méthylol-éther.

9. Procédé suivant au moins l'une des revendications 1 à 8, caractérisé en ce qu'on utilise pour former l'enveloppe aminoplastique des capsules, un précondensat mélamine-formaldéhyde non ionogène hydrosoluble.

10. Procédé suivant la revendication 9, caractérisé en ce qu'on utilise comme précondensat mélamine-formaldéhyde non ionogène hydrosoluble, un précondensat mélamine-formaldéhyde partiellement éthérifié avec du méthanol.

11. Procédé suivant l'une des revendications 1 à 8, caractérisé en ce qu'on utilise des précondensats urée-formaldéhyde pour la formation de l'enveloppe aminoplastique des capsules.

12. Procédé suivant l'une des revendications 1 à 9, caractérisé en ce qu'on utilise pour la formation de l'enveloppe aminoplastique des capsules des mélanges de précondensats mélamine-formaldéhyde et de précondensats urée-formaldéhyde.

13. Procédé suivant l'une des revendications 1 à 8, caractérisé en ce qu'on utilise pour la formation de l'enveloppe aminoplastique des capsules, à côté de précondensats mélamine-formaldéhyde et/ou de précondensats urée-formaldéhyde, d'autres générateurs d'aminoplastes tels que des précondensats aldéhydiques à base de thio-urée, d'une N-alkylurée, de guanidine, d'acétoguanamine, de benzoguanamine, de guanamine caprique, de cyanamide, de dicyanamide et d'alkyl-/arylsulfonamide.

14. Procédé suivant au moins l'une des revendications 1 à 13, caractérisé en ce que les substances contenues dans l'huile hydrophobe sont des partenaires de systèmes à réaction colorée, des parfums et/ou des aromates, des substances modifiant le goût, des vitamines, des engrais, des insecticides, des attractifs agissant sur les insectes, des fongicides, des substances phyto-sanitaires, des agents nettoyants, des solvants, des lubrifiants, des substances luminescentes, des cristaux liquides, des adhésifs pour systèmes à un ou plusieurs composants, des dispersions de pigments colorés ou des dispersions de pigments magnétiques dans des supports du type d'huiles et de cires.

15. Microcapsules, obtenues par un procédé suivant au moins l'une des revendications 1 à 14.

16. Utilisation des microcapsules suivant la revendication 15, dans lesquelles l'huile hydrophobe contient un partenaire réactionnel de systèmes à réaction colorée, notamment dans des papiers d'enregistrement à réaction colorée.

17. Utilisation suivant la revendication 16, pour l'impression segmentaire.

18. Utilisation suivant la revendication 17 dans des procédés d'impression largement dépourvus d'eau, dans les domaines de la flexographie, de la sérigraphie, de l'impression offset par voie humide et par voie sèche et de l'impression en creux.
